# EUROPEAN PATENT SPECIFICATION

(11) **EP 1 240 027 B1**
(45) Date of publication and mention of the grant of the patent: **23.07.2008**
(21) Application number: 00989273.8
(22) Date of filing: 15.12.2000
(51) Int. Cl.: B42D 15/10

(54) **IDENTIFICATION CARD PERSONALIZATION DEVICE WITH WEB BROWSER**
VORRICHTUNG ZUM PERSONALIZIEREN EINER ID KARTE MIT WEB BROWSER
DISPOSITIF SERVANT A PERSONNALISER UNE CARTE D'IDENTIFICATION ET COMPORTANT UN EXPLORATEUR WEB

(30) Priority: 15.12.1999 US 170987 P
(43) Date of publication of application: 18.09.2002
(73) Proprietor: Fargo Electronics, Inc., Eden Prairie, MN 55344 (US)
(72) Inventor: LENZ, Gary, A., Eden Prairie, MN 55346 (US); KLINEFELTER, Gary, M., Eden Prairie, MN 55347 (US)
(74) Representative: McLeish, Nicholas Alistair Maxwell
(86) International application number: PCT/US2000/034050
(87) International publication number: WO 2001/043979

(56) References cited:
- EP-A- 0 195 104
- EP-A- 0 659 588
- WO-A-86/07480
- FR-A- 2 667 416
- US-A- 5 886 334

## Description

### FIELD OF THE INVENTION

The present invention relates to identification card personalization devices. More specifically, the present invention relates to identification card personalization devices in the form of identification card printers, identification card laminators, and laminating identification card printers, which are adapted to couple to a network or other communication medium.

### BACKGROUND OF THE INVENTION

Identification cards are used, for example, to carry information relating to the cardholder. The use of such identification cards is becoming more and more wide spread and are used for many purposes, such as driver's licenses, identification badges, etc. In the past, identification cards have been manufactured using a labor intensive process in which an individual's data was manually stamped or imprinted onto a card. Additionally, in some cases, an instant photograph was taken of the subject and adhered or laminated to a card.

However, with the advent of computers, manufacturing of identification cards has become increasingly automated. An individual's data may be obtained from a computer database and formatted by the computer. The formatted information is then provided to a special identification card personalization device to form the identification card. In one form, the identification card personalization device is an identification card printer that includes a print mechanism for printing images onto card substrates. In another form, the identification card personalization device is an identification card laminator that includes a laminating mechanism for covering a printed surface of the card with a laminate. In yet another form, the identification card personalization device includes both the identification card printer and laminator components.

Identification card personalization devices are typically both input and output devices. The identification card is generally formed by combining textual and graphical images received from host applications running on a PC and/or from other input devices such as keyboards, scanners and digital cameras. In addition, identification cards can include information that is encoded on the card in a magnetic stripe, smart card memory and other forms of encoded data. To ensure secure encoding of the data from the host application to the card, it is necessary for full duplex communication between the host application and the identification card printer.

Identification card printers are typically connected to a PC using a standard parallel port connection, through which print data is provided to the identification card printer. In some cases an additional serial connection between the printer and the PC is established for receiving card data which is to be encoded on the card.

The nature of the communication techniques used to communicate with identification card printers or laminators has tended to limit their functionality and the performance with which they are used. There is a trend toward networking printers over a company intranet or secure internet. This networking trend in combination with web enabled browser technology provide a new set of opportunities for a web based identification card personalization device.

US Patent No. 5,886,334 discloses a system and method for manufacturing and inspecting documents having information recorded thereon formed from multiple units including a visual inspection unit, a recording unit and a packaging unit.

### SUMMARY OF THE INVENTION

The invention provides a card personalization device as set out in claim 1.

The present invention is directed toward an identification card personalization device used to create identification cards. The identification card personalization device includes a network adapter that is connectable to a network and either a print mechanism for printing onto a card, a laminating mechanism for laminating a printed card, or both printing and laminating mechanisms. The printing mechanism may also include an embossing mechanism for the forming of raised or recessed letters common to credit cards. The identification card personalization device includes a web client for subscribing to data on the network and a web server for serving data over the network.

### BRIEF DESCRIPTION OF THE DRAWINGS

FIG. 1 is simplified block diagram of an identification card personalization device, in accordance with various embodiments of the invention, that is coupled to a network.
FIG. 2 is a simplified block diagram of an identification card personalization device, in accordance with various embodiments of the invention.
FIG. 3 is a web page in accordance with various embodiments of the invention.

### DETAILED DESCRIPTION OF THE PREFERRED EMBODIMENTS

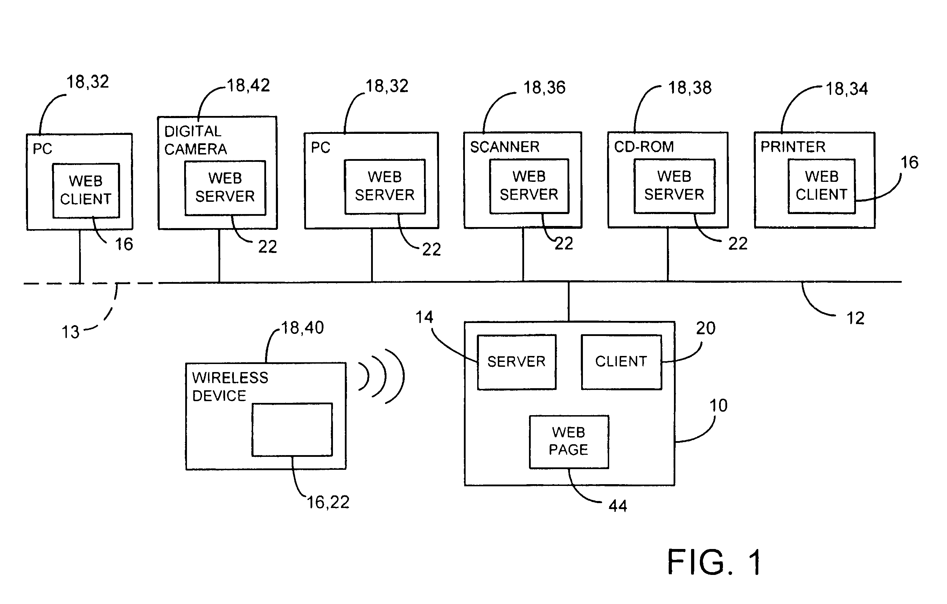

The present invention is directed toward an identification card personalization device 10, shown in FIG. 1, which couples to a network 12 through a network connection. Identification card personalization device 10 is assigned an internet protocol (IP) address to uniquely identify the identification card personalization device 10 on the network 12. One example of identification card personalization device 10 includes a web server 14 that can serve data over network 12 to web clients 16 of various network devices 18. Another example of identification card personalization device 10 includes a web client 20 that can subscribe to data on network 12 that is served by web servers 22 of various network devices 18. The present invention is directed toward an identification card personalization device 10 that includes both a web server 14 and a web client 20.

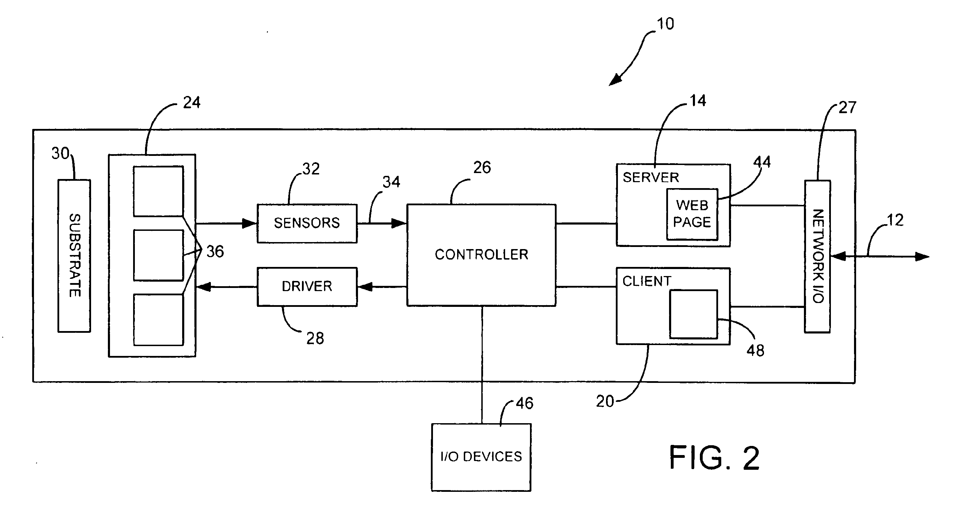

Identification card personalization device 10 can take the form of either an identification card printer, an identification card laminator, or a laminating identification card printer that includes components of both an identification card printer and laminator. FIG. 2 shows a simplified block diagram of an identification card personalization device 10 in accordance with these various embodiments of the invention. In order to simplify the description of these embodiments, some of the blocks in FIG. 2 will be used to represent the components of both the identification card printer and laminator. In general, identification card personalization device 10 of the present invention includes hardware 24, controller 26, and network adapter 27. Controller 26 controls hardware 24 using hardware drivers 28 to process a substrate or card 30. Identification card personalization device 10 can include sensors 32 which can sense various operating parameters of hardware 24 and provide a sensor signal 34 to controller 26 to aid in the control of identification card personalization device 10. Sensor signal 34 can also be used for diagnostic purposes.

The typical embedded controller 26 is an 8, 16 or 32 bit micro-controller such as the Motorola 68HC11 or HC16 family. An embedded micro controller such as the Motorola MPC823 can manage the network communication from a host or client, as well as controlling the electro-mechanical components of the printer. The software control in such microprocessors typically employs a "round robin" or interrupts driven architecture with a single software thread. The use of a kernel can improve performance and permits multi-threading similar to that used on PC platforms for running multiple applications at the same time. Preferably, an operating system or kernel provides efficient use of the microprocessor and allows for multitasking of communications, hardware control, etc., for the embedded system of the invention. The embedded system may use a custom, proprietary operating system or a commercial embedded operating system such as the RTXC, Nucleus, Wind River operating system, Microsoft CE or a JAVA based operating system with a Java Virtual Machine.

In one aspect of the invention, identification card personalization device 10 is an identification card printer where components 36 of hardware 24 include a print mechanism that is adapted to print an image on card 30. The print mechanism performs the printing on card 30 in a known manner using an ink jet, thermal print head, or other suitable print mechanism. Additional components 36 can include, for example, an encoder for encoding data on card 30 in the form of a magnetic stripe data, smart card data, laser card data, and proximity radio frequency identification data (RFID). Some examples of identification card printers include the Professional DTC500, HDP 700, the Pro-L laminating printer and the Persona line manufactured by Fargo Electronics, Inc. of Eden Prairie, Minnesota. Another example of an identification cad printer is disclosed in U.S. Patent No. 5,980,011 entitled "IDENTIFICATION CARD PRINTER," which issued on November 9, 1999 to Cummins et al. and is assigned to Fargo Electronics, Inc.

In another embodiment of the invention, identification card personalization device 10 is an identification card laminator. Here, components 36 of hardware 24 include a laminating mechanism which can apply a laminate over a printed surface of card 30. The laminate acts as a protective layer to protect the printed surface from wear. In addition, the laminate can include security marks formed, for example, by an embosser, which is another possible component 36. An example of a laminator is disclosed in U.S. Patent No. 6,022,429 entitled "LAMINATION TECHNIQUE," which issued to Hagstrom on February 8, 2000, and is assigned to Fargo Electronics, Inc.

Yet another embodiment of the invention of identification card personalization device 10 is a laminating identification card printer, which performs the functions of both the identification card printer and the identification card laminator. Thus, components 36 of this embodiment of the invention include both a print mechanism for printing on card 30 and a laminating mechanism for laminating the printed card 30. One example of a laminating identification card printer is the Pro-L laminating printer manufactured by Fargo Electronics, Inc. of Eden Prairie, Minnesota.

With reference to FIG. 1, network 12 can be any suitable data link such as Ethernet, Ethernet 10BaseT, 100M Ethernet, and Gigabit Ethernet. The network connection may be established through a physical media such as a Universal Serial Bus (USB), a fiber optic cable (FDDI), wire, or IEEE 1384 (Firewire). Additionally, the network connection can utilize a wireless media such as radio frequency (RF) and infrared. Here, network 12 can be established in accordance with suitable wireless data links such as Bluetooth, Home RF, and WiFi. Furthermore, identification card personalization device 10 communicates over the network in accordance with a standardized communication protocol and/or a standardized object based data structure.

The present invention can utilize any industry standard which is capable of communicating data objects or packets over network 12. Two competing technologies are emerging in the personal computing and networking arena. One is based on Microsoft's Component Object Model (COM), Distributed COM (DCOM), and Active X Controls. The other is the Common Object Request Broker Architecture (COBRA) and JAVA technologies which are based upon the Unix operating system and are led by Sun® Microsystems. These object oriented technologies provide for wrapping software functions in a package or object with a standard interface and protocol. This enables a high degree of software reuse and permits the distribution of an application and data over network 12. Networked applications permit the execution of an application between a collection of hardware platforms and operating systems. Additionally, these client server technologies support multiple sessions and multiple clients from a single server.

The various types of data objects which can be transferred through network 12 can be hardware independent and can be created in accordance with an industry standard data object format such as that provided by the extensible Markup Language (XML) and hypertext markup language (HTML). These data objects are not device specific. Instead, applications which reside in identification card printing device 10 and network devices 18 are used to perform the final conversion from the standardized format into the particular format required by hardware drivers of device 10. For example, even though a print mechanism of device 10 may require a particular format of a bit stream in order to print the desired image, applications running on networked devices 18 do not need any specific knowledge of this format or knowledge of the particular operation of the hardware within device 10. XML is a preferred architecture for defining data types, which can be easily parsed. This flexibility provides a clean solution for parsing card graphics, text, magnetic stripe encoding, smart card encoding, etc. It also readily enables communicating new data types such as audio or video.

The protocol for the object based messaging is also not critical, but the preferred protocols will be the internet based protocols such as TCP, UDP, IP, ICC, RPC, XML, HTTP, SNMP, CDPD, RMI, IIOP, etc. These protocols can run on top of IP. TCP is preferred for Internet based usage due to its robustness. UDP will suffice for direct connect or short distance Intranet usage where robustness is not as important.

As mentioned above, examples of identification card personalization device 10 - in the form of either an identification card printer, an identification card laminator, or a laminating identification card printer - includes a web server 14, a web client 20, which can communicate data objects over network 12 in accordance with the above-described formats. These examples will be described in detail below as first and second examples, respectively. Additionally, a preferred embodiment of identification card personalization device according to the invention includes both web server 14 and web client 20 and, thus, is a combination of the first and second examples.

In the first example, identification card personalization device 10 includes web server 14, which serves information or data using internet protocols to networked devices 18 that include a subscribing web client 16. Suitable commercial embedded web servers and TCP/IP stacks that could be used to form web server 14 are available from Rapid Logic, Embedded Systems, Inc. and other companies. Examples of network devices 18 that could subscribe to data published by applications running in identification card personalization device 10 include personal computers (PC) 32, printers 34, scanners 36, compact disc and digital video disc drives (e.g., CD-ROM drives 38), wireless web devices 40 (e.g., cell or mobile phones and personal data assistants), digital cameras 42, memory devices (e.g., hard disc drives), embossers, laminators, and other identification card personalization devices. In general, web server 14 allows the web clients 16 to remotely access data and information relating to identification card personalization device 10.

Examples of the type of data served by web server 14 of identification card printing device 10 include information relating configuration settings, security settings, card processing jobs (printing and/or laminating jobs), encoding data or encoding verification data, card security data, XML data objects, diagnostic information, card data, and other types of data. The type of information and data served by identification card printing device 10 can depend, in part, on the whether identification card personalization device 10 is operating as an identification card printer, an identification card laminator, or a laminating identification card printer. For example, for the identification card printer the card security data generally includes data used to identify a particular card holder such as biometric data relating to finger scans, hand scans, voice recognition data, and hand writing recognition data. However, for the identification card laminator aspect of the invention the security card data can related to security markings formed on the laminate material, such as holograms, which are used for card authentication purposes. Additional examples of the types of data that can be served by server 14 will be discussed below with reference to each of the forms of identification card personalization device 10. However, the laminating identification card printer form of identification card personalization device 10 will generally include the data described with reference to both the identification card printer and the identification card laminator.

Data served by server 14 can be published to a web page 44 that is embedded in server 14 or hosted by a network device 18 on network 12. The data can be accessed from web page 44 by clients 16. Alternatively, the data can be viewed locally by a user on an input/output device 46 in the form of a display device that coupled to identification card personalization device 10, as shown in FIG. 2. Furthermore, web page 44 can display the data dynamically where the data is updated automatically. The active server page (ASP) technology may be used to provide real time data serving.

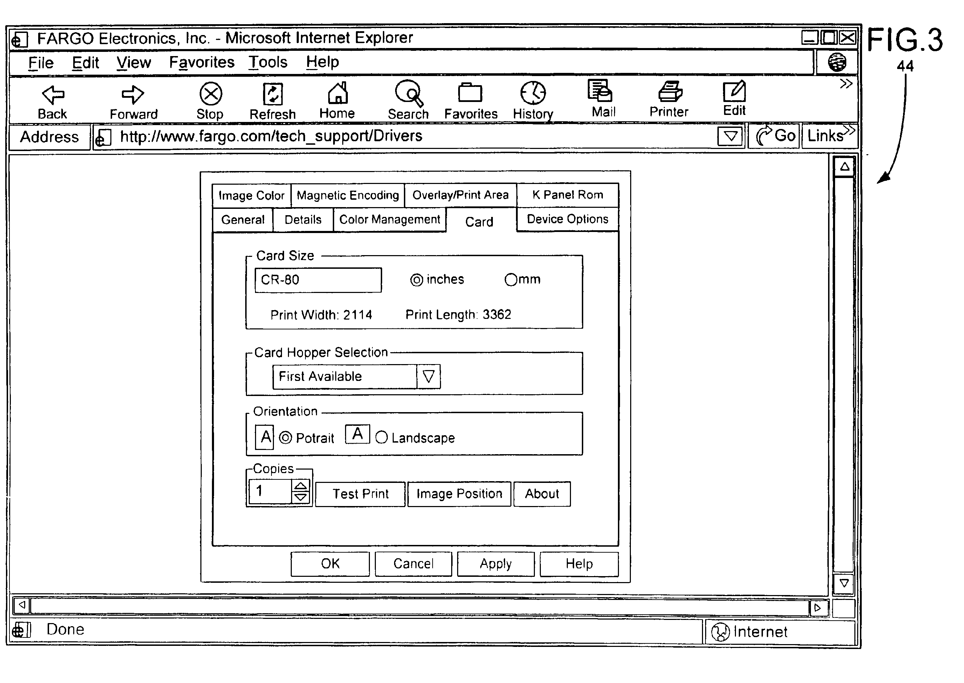

One embodiment of identification card personalization device 10 includes server services, which are used to serve the data on network 12 in accordance with the methods and technologies described above. The server services can further be adapted to publish the data to an embedded web page 44 (FIG. 1) or another web page hosted by a network device 18 on network 12. An example of such a web page 44 is shown in FIG. 3. In this manner, web clients 16 of network devices 18 can view and/or access data being served by web server 14. Thus, even a user on a remotely located network device 18 can access the data over the internet 13, as shown in FIG. 1. One primary application for the serving services is to publish maintenance, diagnostics and other printer health data for access by a remote site. This capability permits the examination of malfunctioning printers by experts and potential correction of the malfunction from an internet connected remote site. Additionally, instructions, support information, supplier information, and HTML and XML links thereto, can also be provided by server 14 on web page 44 to provide additional support for identification card personalization device 10.

The status of a current job and job history for improved security and identification card tracking is another example of information which can be published by server 14. This allows for the monitoring of the progression of these jobs from a remote location. Additionally, where a group of identification card personalization devices 10 are connected to network 12, the current job status of each can be monitored to determine which is available for card processing. Print job status information for the identification card printer can include information relating to the number of cards to be printed, the number of printed cards, the number of remaining cards to be printed, the start time, the estimated completion time, user identifying information, client identifying information, the location of the card in the printer, the remaining print supplies, and information identifying all printers which are processing the print job. For the identification card laminator, information relating to a lamination job status can be served by server 14. This information can include, for example, the number of substrates to be laminated, the number of laminated substrates, the number of remaining substrates to be laminated, the start time, the estimated completion time, user identifying information, client identifying information, the location of the substrate in the laminator, and information identifying all laminators which are processing the lamination job. One embodiment of web page 44 is an active web page that dynamically publishes the above-described job data such that the information on web page 44 is constantly updated.

Another feature that can be performed by the server services is the spooling of card processing job data or objects to other identification card personalization devices 10 or network devices 18 on network 12. This feature allows identification card personalization device 10 to share a large card processing job loads with other devices to more efficiently process the print and/or lamination job. Accordingly, a portion of a large print or lamination job can be passed to other identification card personalization devices 10 to be processed.

The server 14 can also be a dynamic repository for alerts or alarms which are provided by an alert manager in a printer to provide the user with information concerning a current problem, a predicted problem, a diagnostic or a time based preventative action. Furthermore, remaining supply levels or other such information can also be monitored and published and an alert can be served in the event they are in need of replenishment. For the identification card printer, these variables include, for example, print head temperature and print supplies (i.e., cards, print material, etc.). For the identification card laminator, these variables can include laminating temperature, laminator supplies, and other laminator-related information. Server 14 can also act as a repository for audio records that can be published to alert a user to clear a card jam, replace a depleted supply or take other action. Further, server 14 can generate messages requesting service, ordering replacement parts, reporting daily production activity or other alerts, which are sent to various e-mail or pager addresses using, for example, a simple network management protocol (SNMP). These alerts or notifications can also be scheduled to correspond with a particular time or date.

Several types of data can be published by server 14 such as those which can be identified and supported by the XML language. These include text, image, audio, video, animation and other data types. A video, image, or animation file could be used, for example, to provide an operator with an illustration of the operation of the identification card personalization device 10, or instructions for the replacing various supply materials, clearing a jam, etc.

Server 14 can also be a repository for the current configuration settings of the identification card personalization device 10 and a default configuration. These settings can include such things as supervisory control time, synchronization times, calibration settings, process control variables, card settings or data (i.e., card thickness, card geometry, card material, etc.), card motion control velocities, encoding settings, motor currents and voltages, and other general configuration settings. Additionally, for the identification card printer, the configuration settings can include, for example, print head or mechanism heat settings or other identification card printer process variable settings, print options, and print controls. For the laminating identification card printer the configuration settings can further include lamination temperature set points, ribbon and lamination supply velocities, laminator options, lamination controls, and general laminator process variable settings. In the past, this type of information has been configured in a driver resident in a personal computer and communicated to the printer and stored in non-volatile memory. In one embodiment of the invention, the configuration settings of identification card personalization device 10 are published on web page 44, such as is shown in FIG. 3.

Web server 14 can also provide an uploading service for uploading data to subscribing web clients 16. The uploading service can be used to upload data relating to, for example, JAVA applets, driver code objects, printer driver code objects, laminator driver code objects, and XML data objects or documents. The JAVA applets can perform various functions including configuring a networked browser for a human-machine interface.

Web server 14 can also communicate JAVA applets over network 12. In one aspect, server 72 can serve various data types such as FTP, XML, SMNP, POP including POP3, any type of applet, etc. As the USB (Universal Serial Bus) becomes pervasive, the printer thin server can also interrogate other network components to test communications, diagnose camera failures etc. and provide the data to clients on the network.

As mentioned above, web server 14 can also server encoding data or encoding verification data. This data generally relates to data that is encoded onto card 30 by a suitable encoding component of hardware 24 (FIG. 2) of identification card personalization device 10. Typically, the encoding data relates to magnetic stripe data, smart card data, laser card encoding data, or proximity radio frequency identification data (RFID). These and other forms of encoding data and the related encoding methods are common in the art.

Web server 14 can also provide security services to ensure secure data communication between server 14 and clients 16. The security services can include Secure Socket Layer (SSL), Public Key Infrastructure (PKI), proprietary security services, and other known security services. This aspect of server 14 can also serve up access information regarding the number of cards 30 processed (printed or laminated) by identification card personalization device 10, errors that occurred during the processing of the cards 30, the time of the processing, and who processed them. Such security is particularly important for the processing of credit cards, driver's licenses, access cards, and security identification cards.

Another aspect of web server 14 of identification card personalization device 10 provides a series of network services. In one embodiment, the network services establish the connection with network 12 such that server 14 can serve data to clients 16 and web page 44. The network services can also provide dynamic address assignment of all networked devices 18 on network 12. In one embodiment, the dynamic address assignment is made in accordance with a dynamic host configuration protocol (DHCP). The network services can also provide a dynamic link to a network web page that contains links to other network devices 18 on network 12. In another embodiment, the network services include a simple network management protocol (SNMP) to provide the above-described email notifications and pager messages to remote clients 16 in accordance with an email standard. Furthermore, the network services can provide XML messages to business-to-business applications. XML messages may be used for the placement of an order for replacement supplies, replacement parts or for sending an invoice from a card production center to it's customer.

A second example of identification card personalization device 10 includes a web client 20 for subscribing to data provided by web servers 22 of network devices 18 on network 12, typically using a web browser 48 (FIG. 2). One embodiment of web client 20 includes data subscription services through which web client 20 can subscribe to the data provided by web servers 22 or web server 14. Here, web client 20 is coupled to or embedded in a microcomputer/controller 26 and is further connected to network 12. Web client 20 can be accessed and viewed at the identification card personalization device 10 via an I/O device 46 (FIG. 2). I/O device 46 can be a keypad, keyboard, LCD display, or other appropriate I/O device. Web client 20 is networked to network devices 18 (FIG. 1) in which software applications reside. Web client 20 generally has privileges that include input/output, viewing, software download services, etc.

The various services that are available to web client 20 of identification card personalization device 10 are accessed using browser 48, as mentioned above. Browser 48 can include a web page, or an active server page, similar to web page 44, that is designed in accordance with a standard web formats, such as HTML, and which can link to different types of data objects that are provided by servers 22 of the network devices 18. The links can be HTML or XML links.

The subscription services of this embodiment of the invention allow web client 20 to subscribe to data or code objects such as JAVA code, applets, COM, distributed COM, JPEG's, and other types of data objects. In one aspect, this data relates to card construction data, configuration settings, and network device data. The card construction data relates to data that is used to form the final identification card, some of which includes the network device data. The network device data generally relates to data provided through web servers 22 of network devices 18 on network 12 or coupled to network 12 over internet 13. The network devices 18 typically run host applications that are used by the various aspects (printer and laminator) of identification card personalization device 10 to construct an identification card. For example, this data can include image data from digital camera 42 or scanner 36, card data (i.e., card thickness, card geometry, card material, etc.), card security data (e.g., biometric data and security marks), laminating data, encoding data (laser data, magnetic stripe data, etc.), text data, embossing data, audio data, video data, and animation data. Additionally, this data can include commands from host applications running on network devices 18 that are used to drive identification card personalization device 10 to create a desired identification card.

Security services including SSL, PKI, and those in accordance with proprietary security methods of the host applications can be used to ensure the secure transmission of data across network 12. Additionally, web client 12 can subscribe to firmware update services which allow web client 12 to receive firmware updates over network 12 and internet 13 to update the firmware of identification card personalization device 10.

A preferred embodiment of identification card personalization device 10 according to the invention includes both a web server 14 and a web client 22. Accordingly, this embodiment of the invention is a combination of the first and second examples of the identification card personalization device 10 discussed above.

Although the present invention has been described with reference to preferred embodiments, workers skilled in the art will recognize that changes may be made in form and detail without departing from the scope of the invention as defined by the appended claims.

## Claims

1. An identification card personalization device (10) comprising:
at least one hardware component (24) selected from a group consisting of a print mechanism for printing onto a card to create a desired identification card and a lamination mechanism for laminating the card to create the desired identification card;
a network adapter (27) connectable to a network (12); and
a controlling means;
**characterised in that** the identification card personalization device (10) further comprises:
a web client (20) executable by the controlling means and configured to submit a request for data to a server on the network and receive the requested data in response to the request, wherein the controlling means is arranged to use the received requested data to control the at least one hardware component to create the desired identification card; and
a web server (14) executable by the controlling means for serving data relating to the identification card personalization device in response to a request for data received over the network.

2. The device of claim 1, further comprising a network connection at the network adapter (27) and a network address that uniquely identifies the identification card personalization device (10) on the network (12).

3. The device of claim 1, further comprising a web page (44) executable by the controlling means for publishing the data.

4. The device of claim 1, wherein the data served relates to information selected from a group consisting of configuration settings, print job status, lamination job status, print supplies status, laminator supplies status, dynamic printer process variables, dynamic laminator process variables, printer diagnostics, lamination job data, and print job data.

5. The device of claim 1, wherein the received requested data relates to information selected from a group consisting of image data and printer configuration data.

6. The device of claim 3, wherein the web page (44) is configured to publish information selected from a group consisting of instructions, support information, supplier information, and links to information.

7. The device of claim 1, further comprising:
firmware code; and
firmware update services executable by the controlling means for updating the firmware code of the device.

8. The device of claim 1, wherein the data served by the web server is card security data that relates to at least one of biometric security data and security marks.

9. The device of claim 1, wherein the received requested data is card security data that relates to at least one of biometric security data and security marks.

10. The device of claim 4, wherein the print job status information includes information relating to a print job selected from a group consisting of number of cards to be printed, number of printed cards, number of remaining cards to be printed, start time, estimated completion time, user identifying information, client identifying information, location of the card in the printer, remaining print supplies, and information identifying all printers which are processing the print job.

11. The device of claim 4, wherein the lamination job status information includes information relating to a lamination job selected from a group consisting of number of cards to be laminated, number of laminated cards, number of remaining cards to be laminated, start time, estimated completion time, user identifying information, client identifying information, location of the card in the laminator, and information identifying all laminators which are processing the lamination job.

12. The device of claim 1, further comprising a security service executable by the controlling means selected from a group consisting of Secure Socket Layer (SSL), Public Key Infrastructure (PRK), and proprietary security services.

13. The device of claim 1, further comprising an uploading service executable by the controlling means for uploading data selected from a group consisting of an applet for configuring a networked browser for a human-machine interface, printer driver code, a printer drive code object, laminator drive code and a laminator drive code object.

14. The device of claim 1, further comprising network services executable by the controlling means for providing at least one of an email messaging service and a paging messaging service.

15. The device of claim 3, wherein the web page (44) is an active web page, which dynamically displays data relating to information selected from a group consisting of configuration settings, print job status, print supplies status, alerts, email and pager messages, dynamic printer process variables, uploadable applets, printer diagnostics, and print job data, laminator job status, laminator supplies status, laminator diagnostics, laminator job data, user instructions, service instructions, text messages, audio messages, video messages, firmware updates, and encoding verification data.

16. The device of claim 1, including server services executable by the controlling means which are adapted to provide print job data spooling to networked devices.

17. The device of claim 1, further comprising an embosser.

## Patentansprüche

1. Identifizierungskarten-Personalisierungsvorrichtung (10), umfassend:
wenigstens eine Hardware-Komponente (24), die aus einer Gruppe ausgewählt ist, die aus einer Druckeinrichtung zum Drucken auf eine Karte zum Erzeugen einer gewünschten Identifizierungskarte und einer Laminierungseinrichtung zum Laminieren einer Karte zum Erzeugen einer gewünschten Identifizierungskarte besteht;
einen Netzwerkadapter (27), der mit einem Netzwerk (12) verbindbar ist; und
ein Steuermittel;
**dadurch gekennzeichnet, dass** die Identifizierungskarten-Personalisierungsvorrichtung (10) ferner umfasst:
einen Web-Client (20), der vom Steuermittel ausführbar ist und dafür ausgelegt ist, eine Anfrage nach Daten bei einem Server am Netzwerk einzureichen und die angeforderten Daten in Reaktion auf die Anfrage zu empfangen, wobei das Steuermittel dafür ausgelegt ist, die empfangenen angeforderten Daten zu verwenden, um die wenigstens eine Hardware-Komponente zu steuern und die gewünschte Identifizierungskarte zu erzeugen; und
einen Web-Server (14), der vom Steuermittel ausführbar ist, um Daten bezüglich der Identifizierungskarten-Personalisierungsvorrichtung in Reaktion auf eine Anfrage nach Daten, die über das Netzwerk empfangen worden ist, bereitzustellen.

2. Vorrichtung nach Anspruch 1, die ferner eine Netzwerkverbindung am Netzwerkadapter (27) und eine Netzwerkadresse umfasst, die die ldentifizierungskarten-Personalisierungsvorrichtung (10) am Netzwerk (12) eindeutig identifiziert.

3. Vorrichtung nach Anspruch 1, die ferner eine Web-Seite (44) umfasst, die vom Steuermittel ausführbar ist, um die Daten herauszugeben.

4. Vorrichtung nach Anspruch 1, wobei die bereitgestellten Daten sich auf Informationen beziehen, die aus einer Gruppe ausgewählt sind, die aus Konfigurationseinstellungen, einem Druckauftragsstatus, einem Laminierungsauftragsstatus, einem Druckhilfsstoffstatus, einem Laminatorhilfsstoffstatus, dynamischen Druckerprozessvariablen, dynamischen Laminatorprozessvariablen, Druckerdiagnosen, Laminierungsauftragsdaten und Druckauftragsdaten besteht.

5. Vorrichtung nach Anspruch 1, wobei die empfangenen angeforderten Daten sich auf Informationen beziehen, die aus einer Gruppe ausgewählt sind, die aus Bilddaten und Druckerkonfigurationsdaten besteht.

6. Vorrichtung nach Anspruch 3, wobei die Web-Seite (44) dafür ausgelegt ist, Informationen herauszugeben, die aus einer Gruppe ausgewählt sind, die aus Anweisungen, Unterstützungsinformationen, Lieferanteninformationen und Verknüpfungen zu Informationen besteht.

7. Vorrichtung nach Anspruch 1, ferner umfassend:
Firmware-Code; und
Firmware-Aktualisierungsdienste, die vom Steuermittel ausführbar sind, um den Firmware-Code der Vorrichtung zu aktualisieren.

8. Vorrichtung nach Anspruch 1, wobei die vom Web-Server bereitgestellten Daten Kartensicherheitsdaten sind, die sich auf wenigstens biometrische Sicherheitsdaten und/oder Sicherheitsmarkierungen beziehen.

9. Vorrichtung nach Anspruch 1, wobei die empfangenen angeforderten Daten Kartensicherheitsdaten sind, die sich auf wenigstens biometrische Sicherheitsdaten und/oder Sicherheitsmarkierungen beziehen.

10. Vorrichtung nach Anspruch 4, wobei die Druckauftragsstatusinformationen Informationen bezüglich eines Druckauftrags enthalten, die aus einer Gruppe ausgewählt sind, die aus einer Anzahl von zu druckenden Karten, einer Anzahl gedruckter Karten, einer Anzahl verbleibender zu druckender Karten, einem Startzeitpunkt, einem geschätzten Endzeitpunkt, Benutzeridentifizierungsinformationen, Client-Identifizierungsinformationen, einem Ort der Karte im Drucker, verbleibenden Druckhilfsstoffen, und Informationen, die alle Drucker identifizieren, die den Druckauftrag verarbeiten, besteht.

11. Vorrichtung nach Anspruch 4, wobei die Laminierungsauftragsstatusinformationen Informationen bezüglich eines Laminierungsauftrags enthalten, die ausgewählt sind aus einer Gruppe, die aus einer Anzahl zu laminierender Karten, einer Anzahl laminierter Karten, einer Anzahl verbleibender zu laminierender Karten, einem Startzeitpunkt, einem geschätzten Endzeitpunkt, Benutzeridentifizierungsinformationen, Client-Identifizierungsinformationen, einem Ort der Karte im Laminator, und Informationen, die alle Laminatoren identifizieren, die den Laminierungsauftrag verarbeiten, besteht.

12. Vorrichtung nach Anspruch 1, die ferner einen Sicherheitsdienst umfasst, der vom Steuermittel ausführbar ist und aus einer Gruppe ausgewählt ist, die aus einer sicheren Sockelschicht (SSL), einer Öffentlich-Schlüssel-Infrastruktur (PRK) und proprietären Sicherheitsdiensten besteht.

13. Vorrichtung nach Anspruch 1, die ferner einen Hochladedienst umfasst, der vom Steuermittel ausführbar ist, um Daten hochzuladen, die aus einer Gruppe ausgewählt sind, die aus einem Kleinprogramm zum Konfigurieren eines vernetzten Browsers für eine Mensch-Maschine-Schnittstelle, einem Druckertreiber-Code, einem Druckertreiber-Codeobjekt, einem Laminatortreiber-Code und einem Laminatortreiber-Codeobjekt besteht.

14. Vorrichtung nach Anspruch 1, die ferner Netzwerkdienste umfasst, die vom Steuermittel ausführbar sind, um wenigstens einen E-Mail-Meldedienst und/oder einen Funkruf-Meldedienst bereitzustellen.

15. Vorrichtung nach Anspruch 3, wobei die Web-Seite (44) eine aktive Web-Seite ist, die Daten bezüglich Informationen dynamisch anzeigt, die aus einer Gruppe ausgewählt sind, die aus Konfigurationseinstellungen, einem Druckauftragsstatus, einem Druckhilfsstoffstatus, Warnungen, E-Mail- und Funkrufnachrichten, dynamischen Druckerprozessvariablen, hochladbaren Kleinprogrammen, Druckerdiagnosen und Druckauftragsdaten, einem Laminatorauftragsstatus, einem Laminatorhilfsstoffstatus, Laminatordiagnosen, Laminatorauftragsdaten, Benutzeranweisungen, Dienstanweisungen, Textnachrichten, Audionachrichten, Videonachrichten, Firmware-Aktualisierungen und Codierungsüberprüfungsdaten besteht.

16. Vorrichtung nach Anspruch 1, die Server-Dienste enthält, die vom Steuermittel ausführbar sind und dafür ausgelegt sind, ein Druckauftragsdaten-Spooling zu vernetzten Vorrichtungen bereitzustellen.

17. Vorrichtung nach Anspruch 1, die ferner eine Prägevorrichtung umfasst.

## Revendications

1. Dispositif de personnalisation de carte d'identification (10) comportant:
au moins un composant matériel (24) sélectionné dans un groupe comportant un mécanisme d'impression pour une impression sur une carte pour créer une carte d'identification désirée et un mécanisme de pelliculage pour appliquer une pellicule sur la carte afin de créer la carte d'identification désirée;
un adaptateur de réseau (27) connectable à un réseau (12); et
un moyen de commande;
**caractérisé en ce que** le dispositif de personnalisation de carte d'identification (10) comporte en outre:
un client Web (20) exécutable par le moyen de commande et configuré pour présenter une demande pour des données à un serveur sur le réseau et pour recevoir les données demandées en réponse à la demande, dans lequel le moyen de commande est agencé pour utiliser les données demandées reçues pour commander ledit au moins un composant matériel pour créer la carte d'identification désirée; et
un serveur Web (14) exécutable par le moyen de commande pour distribuer des données relatives au dispositif de personnalisation de carte d'identification en réponse à une demande pour des données reçues sur le réseau.

2. Dispositif selon la revendication 1, comportant en outre une connexion de réseau au niveau de l'adaptateur de réseau (27) et une adresse de réseau qui identifie de façon unique le dispositif de personnalisation de carte d'identification (10) sur le réseau (12).

3. Dispositif selon la revendication 1, comportant en outre une page Web (44) exécutable par le moyen de commande pour publier les données.

4. Dispositif selon la revendication 1, dans lequel les données distribuées sont connexes à des informations sélectionnées dans un groupe comportant des paramètres de configuration, un état de la tâche d'impression, un état de la tâche de pelliculage, un état des fournitures d'impression, un état des fournitures de pelliculeuse, des variables de processus d'imprimante dynamique, des variables de processus de pelliculeuse dynamique, des diagnostics d'imprimante, des données de tâche de pelliculage, et des données de tâche d'impression.

5. Dispositif selon la revendication 1, dans lequel les données demandées reçues sont connexes à des informations sélectionnées dans un groupe comportant des données d'image et des données de configuration d'imprimante.

6. Dispositif selon la revendication 3, dans lequel la page Web (44) est configurée pour publier des informations sélectionnées dans un groupe comportant des instructions, des informations de prise en charge, des informations connexes au fournisseur et des liens aux informations.

7. Dispositif selon la revendication 1, comportant en outre:
un code de microprogramme; et
des services de mise à jour de microprogramme exécutables par le moyen de commande pour mettre à jour le code de microprogramme du dispositif.

8. Dispositif selon la revendication 1, dans lequel les données distribuées par le serveur Web représentent des données de sécurité de carte connexes à au moins un élément parmi des données de sécurité biométriques et des indices de sécurité.

9. Dispositif selon la revendication 1, dans lequel les données demandées reçues représentent des données de sécurité de carte connexes à au moins un élément parmi des données de sécurité biométriques et des indices de sécurité.

10. Dispositif selon la revendication 4, dans lequel les informations d'état de tâche d'impression comportent des informations relatives à une tâche d'impression sélectionnées dans un groupe comportant un nombre de cartes à imprimer, un nombre de cartes imprimées, un nombre de cartes restant à imprimer, une heure de début, un délai d'exécution estimé, des informations d'identification d'utilisateur, des informations d'identification de client, un emplacement de la carte dans l'imprimante, des fournitures d'impression restantes, et des informations identifiant toutes les imprimantes qui traitent la tâche d'impression.

11. Dispositif selon la revendication 4, dans lequel les informations d'état de tâche de pelliculage comportent des informations relatives à une tâche de pelliculage sélectionnées dans un groupe comportant un nombre de cartes à pelliculer, un nombre de cartes pelliculées, un nombre de cartes restant à pelliculer, une heure de début, un délai d'exécution estimé, des informations d'identification d'utilisateur, des informations d'identification de client, un emplacement de la carte dans la pelliculeuse, et des informations identifiant toutes les pelliculeuses qui traitent la tâche de pelliculage.

12. Dispositif selon la revendication 1, comportant en outre un service de sécurité, exécutable par le moyen de commande, sélectionné dans un groupe comportant un protocole de sécurité SSL, une infrastructure à clés publiques (PRK), et des services de sécurité propriétaires.

13. Dispositif selon la revendication 1, comportant en outre un service de téléchargement, exécutable par le moyen de commande pour télécharger des données sélectionnées dans un groupe comportant un applet pour configurer un navigateur mis en réseau pour une interface homme - machine, un code de pilote d'imprimante, un objet de code de pilote d'imprimante, un code de pilote de pelliculeuse, un objet de code de pilote de pelliculeuse.

14. Dispositif selon la revendication 1, comportant en outre des services de réseau exécutables par le moyen de commande pour délivrer au moins l'un parmi un service de messagerie électronique et un service de radiomessagerie.

15. Dispositif selon la revendication 3, dans lequel la page Web (44) est une page Web active, qui affiche dynamiquement des données relatives à des informations sélectionnées dans un groupe comportant des paramètres de configuration, un état de tâche d'impression, un état de fournitures d'impression, des alertes, des messages par courriel et par radiomessagerie, des variables de processus d'imprimante dynamique, des applets téléchargeables, des diagnostics d'imprimante, des données de tâche d'impression, un état de tâche de pelliculeuse, un état de fournitures de pelliculeuse, des diagnostics de pelliculeuse, des données de tâche de pelliculeuse, des instructions d'utilisateur, des instructions de service, des messages texte, des messages audio, des messages vidéo, des mises à jour de microprogramme, et des données de vérification de codage.

16. Dispositif selon la revendication 1, comportant des services de serveur exécutables par le moyen de commande qui sont aptes à délivrer des impressions différées de données de tâche d'impression à des dispositifs en réseau.

17. Dispositif selon la revendication 1, comportant en outre une gaufreuse.
